# EUROPÄISCHE PATENTSCHRIFT

(11) **EP 3 595 834 B1**
(45) Veröffentlichungstag und Bekanntmachung des Hinweises auf die Patenterteilung: **25.05.2022**
(21) Anmeldenummer: 18714950.5
(22) Anmeldetag: 26.02.2018
(51) Int. Cl.: B23B 31/02, B23B 31/113

(54) **AXIAL- SICHERUNGSVORRICHTUNG ZUR SICHERUNG EINES ROTIERENDEN SCHNEIDEWERKZEUGS**
AXIAL SECURING DEVICE FOR SECURING A ROTATING CUTTING TOOL
DISPOSITIF DE BLOCAGE AXIAL POUR LE BLOCAGE D'UN OUTIL DE COUPE ROTATIF

(30) Priorität: 14.03.2017 AT 5117 U
(43) Veröffentlichungstag der Anmeldung: 22.01.2020
(73) Patentinhaber: Ceratizit Austria Gesellschaft m.b.H., 6600 Reutte (AT)
(72) Erfinder: BURTSCHER, Peter, 6600 Reutte (AT); PRAST, Josef, 6600 Reutte (AT)
(74) Vertreter: Ciesla, Dirk
(86) Internationale Anmeldenummer: PCT/AT2018/000009
(87) Internationale Veröffentlichungsnummer: WO 2018/165684

(56) Entgegenhaltungen:
- DE-A1-102010 055 429
- GB-A- 2 158 374
- US-A- 3 171 666
- US-A1- 2007 196 188

## Beschreibung

Die vorliegende Erfindung betrifft eine Axial-Sicherungsvorrichtung zur Sicherung eines rotierenden Schneidwerkzeugs nach dem Oberbegriff von Anspruch 1, ein Aufnahmesystem für die Aufnahme eines rotierenden Schneidwerkzeugs mit einer solchen sowie ein Verfahren für die Anpassung einer Werkzeugaufnahmevorrichtung mit einer solchen Axial-Sicherungsvorrichtung.

Es ist bekannt, dass Schneidwerkzeuge eingesetzt werden, um eine rotatorische Bearbeitung eines Werkstücks durchzuführen. Dabei handelt es sich insbesondere um Schneidwerkzeuge, welche als Fräser oder Bohrer ausgebildet sein können. Eine rotatorische Bearbeitung des Werkstücks ist dabei insbesondere so zu verstehen, dass das Schneidwerkzeug für die spanende Bearbeitung selbst eine Rotation um seine Schaftachse durchführt. Dabei lassen sich diese Schneidwerkzeuge von bekannten Schneidwerkzeugen für andere Bearbeitungsmethoden, zum Beispiel mit rotierenden Werkstücken bei Drehverfahren, unterscheiden.

Nachteilhaft bei den bekannten Lösungen ist es, dass Schneidwerkzeuge, welche eine rotatorische Bearbeitung von Werkstücken durchführen sollen, unterschiedlichen Belastungen ausgesetzt sind, und diesen unterschiedlichen Belastungen mit unterschiedlichen mechanischen Lösungen begegnen. Neben einer Abstützung der tatsächlichen Schneidkraft, welche auf das Werkstück aufgebracht wird, ist üblicherweise eine winkelige Anstellung der einzelnen Schneidflächen von solchen Schneidwerkzeugen gegeben. Dies führt dazu, dass bei der Zerspanung mit dem Werkzeug nicht nur die Schneidkraft abgestützt werden muss, sondern durch die beschriebene winklige Anstellung eine Auszugskraft auf das Schneidwerkzeug wirkt. Mit anderen Worten ist das Schneidwerkzeug während seiner Rotation bestrebt, entlang dieser Kraft aus einer entsprechenden Werkzeugaufnahme herausgezogen zu werden. Bei bekannten Schneidwerkzeugen wird dies durch eine Auszugssicherung dadurch gelöst, dass üblicherweise seitlich mithilfe einer Schraube eine Fixierung des Schneidwerkzeugs durchgeführt wird, wie es z.B. insbesondere bei sogenannten Weldon-Aufnahmen der Fall ist. Diese von der Seite eingesetzte Schraube mit einer Klemmfunktionalität verhindert nun, dass die Auszugskraft das Schneidwerkzeug aus der entsprechenden Werkzeugaufnahmevorrichtung herausziehen würde. Es ist jedoch nachteilhaft, dass sich durch das seitliche Einwirken der Schraubkraft und die entsprechende Klemmfunktionalität der Rundlauf des Schneidwerkzeugs verschlechtert. Insbesondere kann dies dazu führen, dass sich die Schaftachse aus der Mitte der Werkzeugaufnahmevorrichtung heraus verschiebt bzw. verkippt und damit die Schaftachse nicht mehr koaxial mit der zentralen Rotationsachse der Werkzeugaufnahmevorrichtung verläuft. Dies kann zu einer verschlechterten Qualität der bearbeiteten Werkstücke führen. Darüber hinaus kann es dazu führen, dass das Schneidwerkzeug mit einer geringeren Einsatzdauer verwendet werden kann. Der Verschleiß eines Schneidwerkzeugs mit nicht koaxialer Schaftachsenausrichtung ist ebenfalls erhöht.

US 3 171 666 A beschreibt eine Axial-Sicherungsvorrichtung nach dem Oberbegriff von Anspruch 1.

Aufgabe der vorliegenden Erfindung ist es, zumindest teilweise die voranstehend beschriebenen Nachteile zu beheben. Insbesondere ist es Aufgabe der vorliegenden Erfindung, in kostengünstiger und einfacher Weise eine Nachrüstmöglichkeit zu geben, um bereits bestehende Werkzeugaufnahmevorrichtungen mit einer Axialsicherung auszustatten.

Voranstehende Aufgabe wird gelöst durch eine Axial-Sicherungsvorrichtung mit den Merkmalen des Anspruchs 1, ein Aufnahmesystem mit den Merkmalen des Anspruchs 8 und ein Verfahren mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Axial-Sicherungsvorrichtung beschrieben sind, selbstverständlich auch im Zusammenhang mit dem erfindungsgemäßen Aufnahmesystem sowie dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Es ist eine Axial-Sicherungsvorrichtung vorgesehen zur Sicherung eines rotierenden Schneidwerkzeugs. Hierfür weist die Axial-Sicherungsvorrichtung einen Grundkörper mit einer Befestigungsschnittstelle für eine Befestigung in einer Werkzeugaufnahmevorrichtung auf. Die Befestigung erfolgt dabei an einer von einem Hauptübertragungsabschnitt für Schneiddrehmoment beabstandeten Befestigungsposition dieser Werkzeugaufnahmevorrichtung. Dabei kann die Befestigung insbesondere in axialer Richtung hinter dem Hauptübertragungsabschnitt, also auf einer von dem Schneidende eines Schneidwerkzeugs abgewandten Seite des Hauptübertragungsabschnitts, vorgesehen sein. Weiter weist der Grundkörper eine Aufnahmeöffnung mit einer Innenwandung auf. Diese Innenwandung wiederum ist mit einem Gegen-Sicherungsabschnitt ausgestattet zum Eingreifen in einen Axial-Sicherungsabschnitt des Schneidwerkzeugs zur Sicherung gegen einen axialen Auszug entlang einer Schaftachse eines Werkzeugschaftes des Schneidwerkzeugs. Der Gegen-Sicherungsabschnitt kann dabei insbesondere z.B. durch einen oder mehrere nach innen ragende Vorsprünge gebildet sein.

Es ist nun ein zusätzliches Bauteil zum Nachrüsten von bereits vorhandenen Werkzeugaufnahmevorrichtungen vorhanden. Die Axial-Sicherungsvorrichtung kann dabei im Wesentlichen hülsenartig ausgebildet sein, um diese Nachrüstfunktionalität zur Verfügung zu stellen. Dabei ist die Aufnahmeöffnung der Axial-Sicherungsvorrichtung insbesondere an einem ersten Ende dieses Grundkörpers angeordnet, während die Befestigungsschnittstelle vorzugsweise am entgegengesetzten Ende des Grundkörpers der Axial-Sicherungsvorrichtung ausgebildet ist. Das zusätzliche Bauteil kann dabei insbesondere zum Nachrüsten in eine übliche Spannzangenaufnahme ausgebildet sein. Die Befestigungsschnittstelle kann zum Beispiel ein Gewinde aufweisen, welches mit einem entsprechenden Gegengewinde bzw. Innengewinde in einem Aufnahmeraum der Werkzeugaufnahmevorrichtung zusammenwirkt. Neben einer solchen Befestigung über eine Gewindeverbindung sind aber auch andere gebräuchliche verdrehsichere Befestigungsarten möglich. Mit anderen Worten kann mithilfe der Befestigungsschnittstelle die Axial-Sicherungsvorrichtung nun innerhalb eines Aufnahmeraums der Werkzeugaufnahmevorrichtung befestigt werden.

Die Axial-Sicherungsvorrichtung kann eine bestehende Werkzeugaufnahmevorrichtung ergänzen. Das Ergänzen bezieht sich dabei auf das Hinzufügen der Funktionalität der axialen Sicherungsmöglichkeit. Während bei bekannten und bereits im Einsatz befindlichen Werkzeugaufnahmevorrichtungen üblicherweise das Schneidwerkzeug über eine entsprechende Spannvorrichtung in der Werkzeugaufnahmevorrichtung gehalten wird, kann bei den bekannten Lösungen keine oder nur in nachteilhafter Weise die bereits erläuterte Axialsicherung zur Verfügung gestellt werden. Das Schneiddrehmoment wird üblicherweise über eine Spannvorrichtung, zum Beispiel mithilfe von Spannzangen oder Schrumpffuttern, übertragen. Sobald also ein Schneidwerkzeug in der Spannvorrichtung der Werkzeugaufnahmevorrichtung eingesetzt ist, kann bei den bekannten Lösungen der Schneidvorgang beginnen. Jedoch kann dies dazu führen, dass neben der Übertragung des Schneiddrehmoments zusätzlich die bereits in der Einleitung erläuterte Auszugskraft auf das Schneidwerkzeug einwirkt. Bei den bekannten Ausführungsformen der Werkzeugaufnahmevorrichtungen kann es dazu kommen, dass ohne eine separate Axial-Auszugssicherung nun das Schneidwerkzeug entlang der Auszugsrichtung aus der Werkzeugaufnahmevorrichtung und im Besonderen aus der Spannvorrichtung herausgezogen wird.

Es kann nun bei einer bestehenden Werkzeugaufnahmevorrichtung die Funktionalität einer Axial-Sicherungsvorrichtung zusätzlich und nachträglich ergänzt werden. Üblicherweise wird der Hauptübertragungsabschnitt für das Schneiddrehmoment durch eine Spannvorrichtung in der Werkzeugaufnahmevorrichtung zur Verfügung gestellt. Die Axial-Sicherungsvorrichtung wird dabei vorzugsweise an einer separaten Position eingesetzt, nämlich der Befestigungsposition, welche von dem Hauptübertragungsabschnitt für das Schneiddrehmoment in axialer Richtung beabstandet ist. Damit wird sichergestellt, dass separat von der Übertragung vom Schneiddrehmoment nun die Axial-Sicherungsfunktionalität durch eine erfindungsgemäße Axial-Sicherungsvorrichtung vorhanden ist. Unter der Beibehaltung der bisher bekannten Funktionalität der Schneidwerkzeuge kann somit die zusätzliche Funktionalität der Axialsicherung hinzugefügt werden, ohne dass die bisherige Funktionalität der Werkzeugaufnahmevorrichtung beeinträchtigt wird. Mit anderen Worten wird durch ein einfaches, kostengünstiges und vor allem kompaktes zusätzliches Bauteil in Form der Axial-Sicherungsvorrichtung die zusätzliche Funktionalität auch bei bereits bestehenden Werkzeugaufnahmevorrichtungen nachrüstbar.

Die Funktionalität der Axialsicherung wird hierüber hinaus in einer besonders vorteilhaften Weise zur Verfügung gestellt. Während bei den bekannten Lösungen das Risiko bestand, dass durch ein seitliches Verklemmen das Schneidwerkzeug mit seiner Schaftachse radial aus der Rotationsachse der Werkzeugaufnahmevorrichtung herausgedrückt wurde und damit möglicherweise eine Verschlechterung des Schneidergebnisses durch das Schneidwerkzeug die Folge war, kann die Axialsicherung mit gleichzeitiger Koaxialität dieser Achsen erreicht werden.

Das Beibehalten einer koaxialen Ausrichtung einer Schaftachse des Schneidwerkzeugs einerseits und einer entsprechenden Rotationsachse der Werkzeugaufnahmevorrichtung andererseits wird durch die spezielle geometrische Ausgestaltung der Axial-Sicherungsvorrichtung gewährleistet. Hierfür ist die Axial-Sicherungsvorrichtung mit der Aufnahmeöffnung ausgestaltet. Die Aufnahmeöffnung kann dabei, wie dies später noch erläutert wird, eine im Wesentlichen zylindrische Aufnahmeöffnung aufweisen. Eine Innenwandung, welche insbesondere entlang bzw. parallel der Schaftachse bzw. einer Rotationsachse der Axial-Sicherungsvorrichtung ausgerichtet ist, kann hier zur Verfügung gestellt sein, um Gegen-Sicherungsabschnitte auszubilden. Ein Gegen-Sicherungsabschnitt dient zum Eingreifen in einen Axial-Sicherungsabschnitt des Schneidwerkzeugs. Ein solcher Gegen-Sicherungsabschnitt kann dabei insbesondere als ein Vorsprung nach innen ausgebildet sein. Üblicherweise können Schneidwerkzeuge für den Einsatz bei einer erfindungsgemäßen Axial-Sicherungsvorrichtung mit einem Aufnahmeende ausgestaltet sein, welches einen entsprechenden Axial-Sicherungsabschnitt aufweist. Nachfolgend findet sich eine Erläuterung eines Schneidwerkzeugs, welches beispielsweise in der Axial-Sicherungsvorrichtung einsetzbar ist.

Es kann ein Schneidwerkzeug vorgesehen sein für die rotatorische Bearbeitung eines Werkstücks. Ein solches Schneidwerkzeug weist einen Werkzeugschaft mit einem Schneidende für eine spanende Bearbeitung des Werkstücks auf. Weiter ist ein Aufnahmeende vorgesehen zur Aufnahme entlang einer Schaftachse des Werkzeugschaftes in einer Werkzeugaufnahmevorrichtung. Ein für die Nutzung bei der vorliegenden Erfindung geeignetes Schneidwerkzeug zeichnet sich dadurch aus, dass das Aufnahmeende zumindest einen Axial-Sicherungsabschnitt für eine Sicherung gegen einen axialen Auszug entlang der Schaftachse in einer Auszugsrichtung aufweist. Der Axial-Sicherungsabschnitt kann zumindest eine Vertiefung in einer Außenumfangsfläche des Aufnahmeendes aufweisen. Darüber hinaus kann das Aufnahmeende mit zumindest einem Axial-Positionierungsabschnitt für eine axiale Positionierung entlang der Schaftachse in der Auszugsrichtung versehen sein. Weiter kann der zumindest eine Axial-Positionierungsabschnitt mit wenigstens einer Kontaktfläche ausgestattet sein, welche mit einem durch die Schaftachse als Flächennormale definierten Schaftquerschnitt einen spitzwinkligen Positionierungswinkel aufweist. Der Axial-Positionierungsabschnitt kann insbesondere an einer Stirnseite des Aufnahmeendes ausgebildet sein.

Ein solches Schneidwerkzeug kann also in bekannter Weise zum Beispiel ein Bohrwerkzeug oder ein Fräswerkzeug sein. Das Schneidwerkzeug kann dabei insbesondere einstückig ausgebildet sein, insbesondere z.B. aus Hartmetall oder Stahl. Für die Bearbeitung des Werkstücks wird das Schneidwerkzeug in eine Rotation um eine Rotationsachse versetzt, welche insbesondere die Schaftachse in koaxialer Ausrichtung mit einer entsprechenden Rotationsachse der Werkzeugaufnahmevorrichtung ist. Die Werkzeugaufnahmevorrichtung dient dabei der Aufnahme des Schneidwerkzeugs. So kann hier eine direkte wie auch eine indirekte Aufnahme vorgesehen sein, wie sie später noch mit Bezug auf die Axial-Sicherungsvorrichtung näher erläutert wird. An dem Schneidende ist zumindest eine Schneide am Schneidwerkzeug vorgesehen, um die spanende Bearbeitung des Werkstücks durchzuführen. Entlang der Schaftachse kann nun das Aufnahmeende des Werkzeugschaftes in der Werkzeugaufnahmevorrichtung befestigt werden.

Einer der Kerngedanken eines solchen Schneidwerkzeugs ist es, dass am Aufnahmeende zwei unterschiedliche Funktionalitäten in unterschiedlichen geometrischen Abschnitten separat voneinander ausgebildet sind. Die unterschiedlichen Funktionalitäten sind dabei zum einen die Axial-Sicherung und zum anderen die Axial-Positionierung. Die Axial-Sicherung ist hier die primäre Schutzfunktionalität gegen einen axialen Auszug entlang der Schaftachse. Der Axial-Sicherungsabschnitt kann dazu zum Beispiel geometrische Ausbildungen aufweisen, welche als Vorsprünge oder Rücksprünge, zum Beispiel mit dem später noch erläuterten Formschluss, die axiale Auszugsicherung zur Verfügung stellen. Insbesondere korreliert dabei der jeweilige Axial-Sicherungsabschnitt mit einem entsprechenden Gegen-Sicherungsabschnitt einer Axial-Sicherungsvorrichtung der Werkzeugaufnahm evorrichtung.

Die Sicherung gegen den axialen Auszug wird dabei insbesondere als geometrische Sicherung verstanden, um nach dem Einsetzen des Aufnahmeendes in den Werkzeugschaft sicherzustellen, dass bei Belastung während der rotatorischen Bearbeitung des Werkstücks ein axialer Auszug vermieden wird. Insbesondere erfolgt dies mit einer Bewegung des Aufnahmeendes bzw. des Axial-Sicherungsabschnitts von einer Freigabeposition in eine Sicherungsposition, in welcher gegen den axialen Auszug die Sicherungsfunktionalität gegeben ist.

Separat von dem Axial-Sicherungsabschnitt ist z.B. zusätzlich ein Axial-Positionierungsabschnitt vorgesehen. Unter der Positionierung entlang der Schaftachse in der Auszugsrichtung ist dabei im Sinne der vorliegenden Erfindung eine Positionierbewegung zu verstehen. Insbesondere ist der Axial-Positionierungsabschnitt funktional mit dem Axial-Sicherungsabschnitt zusammenwirkend ausgebildet, so dass bei der Sicherungsbewegung von der Freigabeposition in die Sicherungsposition automatisch auch die Positionierbewegung durchgeführt wird. Die Positionierbewegung wird dabei verwendet, um eine Positionierung der Schaftachse in der Auszugsrichtung zur Verfügung zu stellen. Darunter ist zu verstehen, dass für die Positionierung das gesamte Schneidwerkzeug entlang der Schaftachse in der Auszugsrichtung bewegt wird und dabei sämtliches axiales Spiel eliminiert wird. Das bedeutet, dass sozusagen durch das Zusammenwirken zwischen einem Axial-Positionierungsabschnitt und einer entsprechenden Gegen-Kontaktfläche der Axial-Sicherungsvorrichtung eine Positionierbewegung automatisch mit der Sicherungsbewegung durchgeführt wird, welche in Richtung des Auszugs gerichtet ist. Mit anderen Worten müsste nun für einen axialen Auszug der axiale Sicherungsabschnitt von der Sicherungsposition in die Freigabeposition zurückgeführt werden, so dass eine doppelte Sicherungsfunktionalität gegeben ist. Die Korrelation zwischen dem Axial-Positionierungsabschnitt bzw. der Kontaktfläche einerseits und einer zugehörigen Gegen-Kontaktfläche der Axial-Sicherungsvorrichtung andererseits führt zu einer völligen Eliminierung von axialem Spiel bei einer Bewegung in die Sicherungsposition.

Befindet sich ein Schneidwerkzeug im Einsatz, so wird nun die entsprechende Schneidkraft über das Schneidwerkzeug auch an das Aufnahmeende und dort an die Axial-Sicherungsvorrichtung übertragen. Die Kraft teilt sich dabei insbesondere in zwei Komponenten auf. Zum einen handelt es sich um die Schneidkraft, welche rotatorisch abgetragen wird. Zusätzlich handelt es sich um eine Auszugskraft, welche entlang der Schaftachse in der Auszugsrichtung das Schneidwerkzeug aus der Werkzeugaufnahmevorrichtung herausziehen möchte. Damit wirkt diese Auszugskraft in die gleiche Richtung, wie der Axial-Positionierungsabschnitt das Schneidwerkzeug in seine Sicherungsposition bewegt hat bzw. dort positioniert.

Um dies zur Verfügung zu stellen, ist die Kontaktfläche derart ausgestaltet, dass sie einen Positionierungswinkel in der definierten Weise zum Schaftquerschnitt aufweist, welcher spitzwinklig ausgebildet ist. Durch diese spitzwinklige Ausbildung wird nun sichergestellt, dass zum Beispiel durch eine Montagebewegung in rotierender Weise nicht nur eine Rotationsbewegung für die Ausbildung der Sicherung mithilfe des Axial-Sicherungsabschnitts zur Verfügung gestellt wird, sondern zusätzlich auch eine Hubbewegung aus der Werkzeugaufnahmevorrichtung in Auszugsrichtung heraus. Diese Hubbewegung kann insbesondere basierend auf dem Prinzip zueinander bewegter schiefer Ebenen erfolgen. Diese doppelte Bewegung, also die Rotation und die Hubbewegung, wird durch zwei separate Bauteilabschnitte, nämlich den Axial-Sicherungsabschnitt einerseits und den Axial-Positionierungsabschnitt andererseits zur Verfügung gestellt und bringt auf dieser Weise in kostengünstiger und einfacher Weise die doppelte Sicherungsfunktionalität und die Eliminierung sämtlichen axialen Spiels mit sich.

Neben der erhöhten Sicherheit wird durch die Axial-Positionierung mithilfe des Axial-Positionierungsabschnitts auch keinerlei Einfluss genommen auf den Rundlauf bzw. die Ausrichtung der Schaftachse relativ zur Werkzeugaufnahmevorrichtung. Neben einer verbesserten Sicherungsfunktionalität ist ein verbesserter Rundlauf bei gleichzeitig reduzierter Komplexität des gesamten Schneidwerkzeugs gegeben.

Der Gegen-Sicherungsabschnitt kann eine strukturelle Ausgestaltung aufweisen. Insbesondere handelt es sich hierbei um wechselwirkende Flächen bzw. wechselwirkende Geometrien des Gegen-Sicherungsabschnitts, für eine entsprechende Wechselwirkung mit zugehörigen Flächen bzw. Geometrien der Axial-Sicherungsabschnitte des Schneidwerkzeugs. Insbesondere sind die Gegen-Sicherungsabschnitte als Vorsprünge und/oder Rücksprünge ausgestaltet, welche über die Innenwandung in Richtung einer zentralen Achse hervorstehen oder von dieser zurückspringen. Bevorzugt ist es, wenn diese Wechselwirkung einen Formschluss ausbildet, um die axiale Sicherungsfunktionalität zur Verfügung stellen zu können. Dabei ist noch darauf hinzuweisen, dass eine erfindungsgemäße Axial-Sicherungsvorrichtung sowohl bereits bei bestehenden Werkzeugaufnahmevorrichtungen nachrüstbar ist, aber auch Werkzeugaufnahmevorrichtungen denkbar sind, die durch eine entsprechende Gegen-Befestigungsschnittstelle die Befestigungsmöglichkeit für die Axial-Sicherungsvorrichtung gewährleisten können.

Es kann von Vorteil sein, wenn separat von der Befestigungsschnittstelle eine Nebenübertragungsfläche ausgebildet ist zur drehmomentübertragenden Kontaktierung einer Gegen-Nebenübertragungsfläche der Werkzeugaufnahmevorrichtung. Einer der Kerngedanken ist es, dass der größte Anteil an Schneiddrehmoment über die bekannten und vorhandenen Hauptübertragungsabschnitte einer Spannvorrichtung übertragen werden können. Sofern es sich um besonders schwer zu bearbeitendes Material oder schwierige Bearbeitungssituationen handelt, kann jedoch das Schneiddrehmoment sehr große Werte annehmen. Für solche Fälle kann eine zusätzliche Sicherungsfunktion bei einer Axial-Sicherungsvorrichtung zur Verfügung gestellt werden. Eine Nebenübertragungsfläche dient dazu, das Restdrehmoment bei hoher Belastung von dem Schneiddrehmoment zusätzlich noch über die Axial-Sicherungsvorrichtung zu übertragen. Während bei den bekannten Lösungen bei dem Anstieg des Schneiddrehmoments über eine vordefinierte Grenze ein Durchrutschen in Rotationsrichtung möglich war, kann nun dieses Restdrehmoment bei der Axial-Sicherungsvorrichtung nun zusätzlich über die Nebenübertragungsfläche bei hoher Belastung abgetragen werden. Damit wird eine zusätzliche Sicherung bei hoher Belastung bzw. in Überlastsituationen gewährleistet. Die Nebenübertragungsfläche bildet zusammen mit der Gegen-Nebenübertragungsfläche sozusagen den Nebenübertragungsabschnitt der Axial-Sicherungsvorrichtung und der Werkzeugaufnahmevorrichtung für das Schneiddrehmoment aus.

Darüber hinaus ist es von Vorteil, wenn die Nebenübertragungsfläche für einen zumindest teilweisen Formschluss mit der Gegen-Nebenübertragungsfläche ausgebildet ist. Bevorzugt ist es darüber hinaus, wenn zwischen diesen beiden Flächen nicht nur ein Formschluss, sondern ein vorzugsweise flächiger, insbesondere ebener und kontaktierender Reibschluss zur Verfügung gestellt wird. Durch ein entsprechendes Anpressen mit einer Anpresskraft kann die Reibungskraft erhöht werden, so dass in definierter Weise einstellbar ist, wie hoch das Restdrehmoment ist, welches über diesen Nebenübertragungsabschnitt übertragbar ist. Ein Formschluss führt darüber hinaus zu einer besonders kompakten, einfachen und kostengünstigen Bauweise einer Axial-Sicherungsvorrichtung.

Weiter von Vorteil ist es, wenn die Befestigungsschnittstelle eine Befestigungsrichtung aufweist, wobei die Nebenübertragungsfläche die Gegen-Nebenübertragungsfläche quer zur Befestigungsrichtung kontaktiert. Damit kann bei der Durchführung einer Befestigungsbewegung zum Beispiel in Form einer Befestigungsrotation beim Anziehen eines Gewindes in Form der Befestigungsschnittstelle gleichzeitig auch die Nebenübertragungsfläche festgezogen werden. Mit anderen Worten stehen die Kontaktflächen des Nebenübertragungsabschnitts quer zur Befestigungsrichtung und sind insbesondere in ebener oder im Wesentlichen ebener Weise ausgebildet. Hier wird es möglich, in besonders einfacher und kostengünstiger Weise diese Zusatzfunktionalität in einer einzigen Befestigungsbewegung zu erreichen.

Von Vorteil ist es darüber hinaus, wenn zwischen der Nebenübertragungsfläche und der Befestigungsschnittstelle ein Freiraum ausgebildet ist. Ein solcher Freiraum kann zum Beispiel als Freistich oder als umlaufende Nut zur Verfügung gestellt sein. Damit wird insbesondere eine Entkopplung von den unterschiedlichen Funktionen, nämlich der Übertragung des Restdrehmoments einerseits und der Befestigungsfunktionalität andererseits erzielt. Auch die Übertragung von Kräften wird in diesem Bereich verbessert, da insbesondere Kerbspannungen in diesem Materialabschnitt des Grundkörpers reduziert oder sogar minimiert werden können.

Bei der Axial-Sicherungsvorrichtung ist eine Gegen-Kontaktfläche vorgesehen zum Zusammenwirken mit einem Axial-Positionierungsabschnitt des Schneidwerkzeugs für eine axiale Positionierung entlang der Schaftachse in der Auszugsrichtung.

Die Gegen-Kontaktfläche ist an einer inneren Bodenfläche der Aufnahmeöffnung des Grundkörpers angeordnet. Eine solche Gegen-Kontaktfläche, welche für die Positionierungsbewegung von Vorteil ist bzw. diese impliziert oder durchführt, ist bei einer Anordnung innerhalb der Aufnahmeöffnung besonders vorteilhaft angeordnet und in geschützter Weise ausgebildet. Gleichzeitig kann die entsprechende Innenwandung der Aufnahmeöffnung eine Führungsfunktionalität nicht nur für das Einführen des Aufnahmeendes des Schneidwerkzeugs zur Verfügung stellen, sondern dient darüber hinaus auch der Führung der Hubbewegung, welche auch als Positionierungsbewegung durch die Gegen-Kontaktfläche zur Verfügung gestellt wird. Darüber hinaus ist eine besonders einfache und kostengünstige Korrelation zur Schaftachse des Schneidwerkzeugs möglich.

Von Vorteil ist es darüber hinaus, wenn die Aufnahmeöffnung eine hülsenförmige Ausbildung, insbesondere in Form einer im Wesentlichen zylindrischen Vertiefung aufweist, wobei der Gegen-Sicherungsabschnitt an der Innenwandung in Form einer inneren Umfangsfläche der Aufnahmeöffnung angeordnet ist. Die innere Umfangsfläche kann dabei auch als Mantelfläche der entsprechenden im Wesentlichen zylindrischen Vertiefung bezeichnet werden. Dies führt ebenfalls zu einer sicheren und geschützten Anordnung der Gegen-Sicherungsabschnitte, welche insbesondere vor unerwünschter mechanischer Beeinflussung geschützt sind. Auch die Kompaktheit der Bauweise wird auf diese Weise erhöht und nicht zuletzt die Herstellbarkeit vereinfacht. Selbstverständlich können an der Umfangsfläche die Gegen-Sicherungsabschnitte durch geometrische Korrelationen, zum Beispiel in Form von Vorsprüngen und/oder Rücksprüngen ausgebildet sein.

Weiter von Vorteil ist es, wenn der Grundkörper eine Montageschnittstelle aufweist für die Aufnahme eines Befestigungswerkzeugs zur Durchführung einer Befestigungsbewegung.

Ein weiterer Gegenstand der vorliegenden Erfindung ist ein Aufnahmesystem für die Aufnahme eines rotierenden Schneidwerkzeugs zur rotierenden Bearbeitung eines Werkstücks gemäß Anspruch 8. Hierbei weist das Aufnahmesystem eine erfindungsgemäße Axial-Sicherungsvorrichtung sowie eine Werkzeugaufnahmevorrichtung für eine rotierende Arbeitsbewegung auf. Dabei ist die Axial-Sicherungsvorrichtung mittels der Befestigungsschnittstelle in der Befestigungsposition in einem Aufnahmeraum der Werkzeugvorrichtung befestigt. Das Aufnahmesystem bringt damit die gleichen Vorteile mit sich, wie sie ausführlich mit Bezug auf die Axial-Sicherungsvorrichtung erläutert worden sind.

Bei dem Aufnahmesystem ist es von Vorteil, wenn die Axial-Sicherungsvorrichtung entgegen der Auszugsrichtung hinter einer Spannvorrichtung der Werkzeugaufnahmevorrichtung in dem Aufnahmeraum angeordnet ist. Damit liegt die Axial-Sicherungsvorrichtung in einem geschützten Bereich und separat vom Hauptübertragungsabschnitt für das Schneiddrehmoment angeordnet. Die entsprechende Trennung dieser beiden Funktionalitäten, also der Übertragung des Schneiddrehmoments einerseits und der axialen Auszugsicherung andererseits, ist damit in kostengünstiger, kompakter und vor allem einfacher Weise innerhalb des Aufnahmeraums der Werkzeugaufnahmevorrichtung gewährleistet. Dabei korreliert die Position der Axial-Sicherungsvorrichtung insbesondere mit einem entsprechend ausgebildeten Aufnahmeende des Schneidwerkzeugs.

Weiter von Vorteil ist es, wenn die Werkzeugaufnahmevorrichtung zumindest eine der folgenden Spannvorrichtungen mit dem Hauptübertragungsabschnitt für Schneiddrehmoment aufweist:
- Schrumpfaufnahme,
- eine oder mehrere Spannzangen,
- Backenfutter.

Bei der voranstehenden Aufzählung handelt es sich um eine nicht abschließende Liste. Selbstverständlich können innerhalb einer Spannvorrichtung bzw. innerhalb einer Werkzeugaufnahmevorrichtung auch unterschiedliche und andere technische Umsetzungen für die Spannvorrichtung eingesetzt werden. Auch ist es denkbar, dass die Spannvorrichtung in auswechselbarer Weise im Aufnahmeraum der Werkzeugaufnahmevorrichtung angeordnet ist.

Ebenfalls Gegenstand der vorliegenden Erfindung ist ein Verfahren für die Anpassung einer Werkzeugaufnahmevorrichtung an die Aufnahme eines Schneidwerkzeugs gemäß Anspruch 11.

Damit sind die gleichen Vorteile erzielbar, wie sie ausführlich mit Bezug auf das Aufnahmesystem sowie mit Bezug auf die Axial-Sicherungsvorrichtung erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen schematisch:
- Fig. 1: eine Ausführungsform eines Schneidwerkzeugs zum Einsatz in einer Axial-Sicherungsvorrichtung,
- Fig. 2: eine vergrößerte Detaildarstellung der Ausführungsform von Fig. 1,
- Fig. 3: eine Ausführungsform einer erfindungsgemäßen Axial-Sicherungsvorrichtung,
- Fig. 4: die Ausführungsform der Fig. 3 in Draufsicht,
- Fig. 5: eine Ausführungsform einer Werkzeugaufnahmevorrichtung mit eingesetztem Schneidwerkzeug,
- Fig. 6: die Ausführungsform der Fig. 1 bis 4 mit dem Schneidwerkzeug in Freigabeposition,
- Fig. 7: die Ausführungsform der Fig. 6 während der Montagebewegung,
- Fig. 8: die Ausführungsform der Fig. 6 und 7 in der Sicherungsposition,
- Fig. 9: die Ausführungsform der Fig. 6 im schematischen Teil-Querschnitt,
- Fig. 10: die Ausführungsform der Fig. 7 im schematischen Teil-Querschnitt und
- Fig. 11: die Ausführungsform der Fig. 8 im schematischen Teil-Querschnitt.

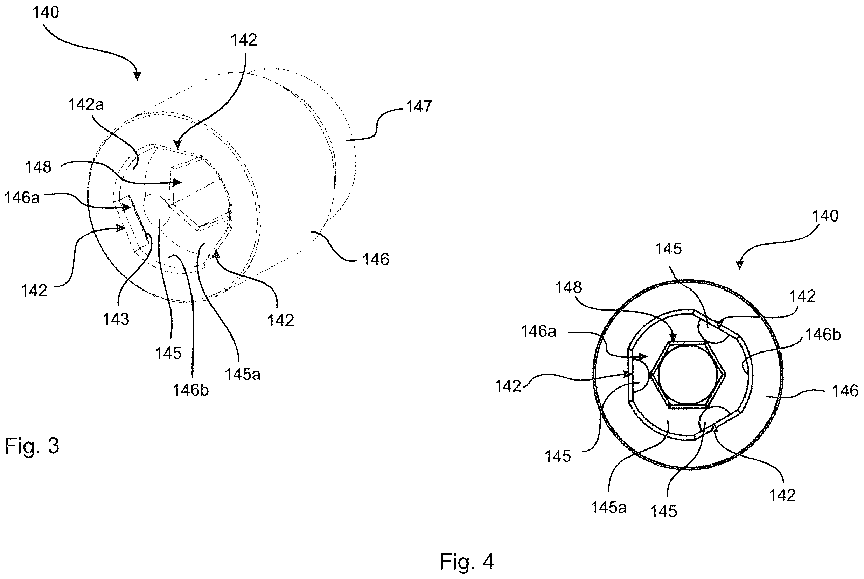

Insbesondere die Fig. 3, 4 und 5 zeigen eine Axial-Sicherungsvorrichtung 140 sowie ein entsprechendes Aufnahmesystem 300. Die Axial-Sicherungsvorrichtung 140 ist hier in hülsenförmiger Weise mit dem Grundkörper 146 ausgestattet. Eine Aufnahmeöffnung 146a ist hier in im Wesentlichen zylindrischer Weise ausgebildet und mit einer Innenwandung 146b versehen. Durch die zylindrische Ausgestaltungsform ist eine Bodenfläche 145a einerseits und gleichzeitig die entsprechende innere Umfangsfläche 142a als Innenwandung 146b vorgesehen. An der inneren Umfangsfläche 142a sind dabei die Gegen-Sicherungsabschnitte 142 angeordnet. Bei der dargestellten Ausführungsform sind insbesondere drei Gegen-Sicherungsabschnitte 142 in Form von Vorsprüngen ausgebildet, was im Hinblick auf eine Zentrierung und geometrische Bestimmtheit besonders vorteilhaft ist. Es können jedoch auch weniger, d.h. nur ein oder zwei, oder auch mehr Gegen-Sicherungsabschnitte 142 vorgesehen sein. An der Bodenfläche 145a sind wiederum die Gegen-Kontaktflächen 145 in Form von Kugeloberflächen vorgesehen. Obwohl die Gegen-Kontaktflächen 145 bei der dargestellten Ausführungsform die Form von Kugeloberflächen aufweisen, sind auch andere Ausgestaltungen möglich, die im Zusammenwirken mit einer zugeordneten Kontaktfläche 45 eines Schneidwerkzeugs die im Folgenden noch näher beschriebene Hubbewegung bewirken. Die Hubbewegung wird dabei insbesondere unter Ausnutzung des Prinzips schiefer Ebenen bewirkt. Obwohl in den Figuren drei solche Gegen-Kontaktflächen 145 dargestellt sind, können auch wiederum mehr als drei oder weniger als drei vorgesehen sein. Für eine Realisierung der Hubbewegung ist eine solche Gegen-Kontaktfläche 145 grundsätzlich ausreichend.

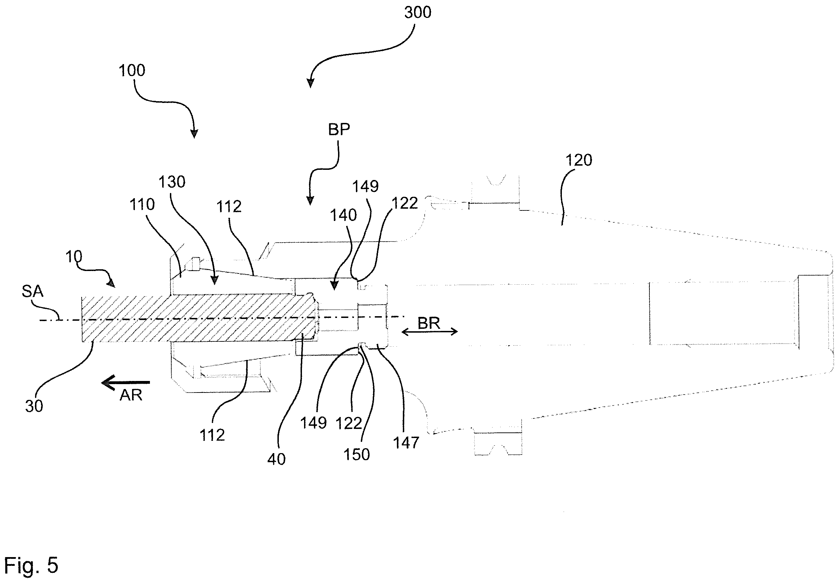

In der Fig. 5 ist eine Darstellung angegeben, in welcher das gesamte Aufnahmesystem 300 zu erkennen ist. Entlang einer Befestigungsrichtung BR kann die Axial-Sicherungsvorrichtung 140 in den entsprechenden Aufnahmeraum 130 der Werkzeugaufnahmevorrichtung 100 bzw. des Aufnahmekörpers 120 eingesetzt werden. In Form von einem Gewinde ist die Befestigungsschnittstelle 147 vorgesehen, so dass nun durch ein Einschrauben in den Aufnahmekörper 120 die Axial-Sicherungsvorrichtung 140 die Befestigungsposition BP gemäß Fig. 5 erreichen kann. Obwohl eine Befestigung über eine Schraubverbindung angegeben ist, kann die Befestigung auch in anderer Weise erfolgen. Dabei wird die Axial-Sicherungsvorrichtung 140 jedoch in jedem Fall gegen Verdrehen gesichert in dem Aufnahmekörper 120 befestigt. Abschließend wird in dem Aufnahmeraum 130 auch die Spannvorrichtung 110 eingesetzt, welche den Hauptübertragungsabschnitt 112 den Schneiddrehmoment zur Verfügung stellt.

Die Fig. 5 zeigt eine Situation, in welcher das Schneidwerkzeug 10 bereits eingesetzt und eingespannt in der Spannvorrichtung 110 vorliegt. Gleichzeitig ist die axiale Auszugsicherung in Auszugsrichtung AR durch das entsprechende Zusammenwirken zwischen den Gegen-Sicherungsabschnitten 142 und den Axial-Sicherungsabschnitten 42 zur Verfügung gestellt.

Wie der Fig. 5 weiter zu entnehmen ist, ist zusätzlich zur axialen Auszugssicherung auch die Übertragung von Restdrehmoment des Schneiddrehmoments über die Axial-Sicherungsvorrichtung 140 möglich. Dafür ist die Axial-Sicherungsvorrichtung 140 mit einer Nebenübertragungsfläche 149 ausgestaltet, welche hier in reibschlüssigem oder formschlüssigem Kontakt mit der Gegen-Nebenübertragungsfläche 122 des Aufnahmekörpers 120 der Werkzeugaufnahmevorrichtung 100 in Kontakt steht. Zwischen der Nebenübertragungsfläche 149 und der Befestigungsschnittstelle 147 ist hier ein nutförmiger Freistich 150 vorgesehen, um diese beiden technischen Funktionalitäten voneinander geometrisch zu entkoppeln und insbesondere die Kraftübertragung auf ein Minimum zwischen diesen beiden Teilabschnitten des Grundkörpers 146 zu reduzieren. Obwohl in den Figuren eine Erstreckung der Nebenübertragungsfläche 149 im Wesentlichen senkrecht zur axialen Richtung gezeigt ist, kann diese z.B. auch eine andere Ausrichtung aufweisen, z.B. insbesondere konisch ausgebildet sein oder sich anderweitig in Axialrichtung verjüngen.

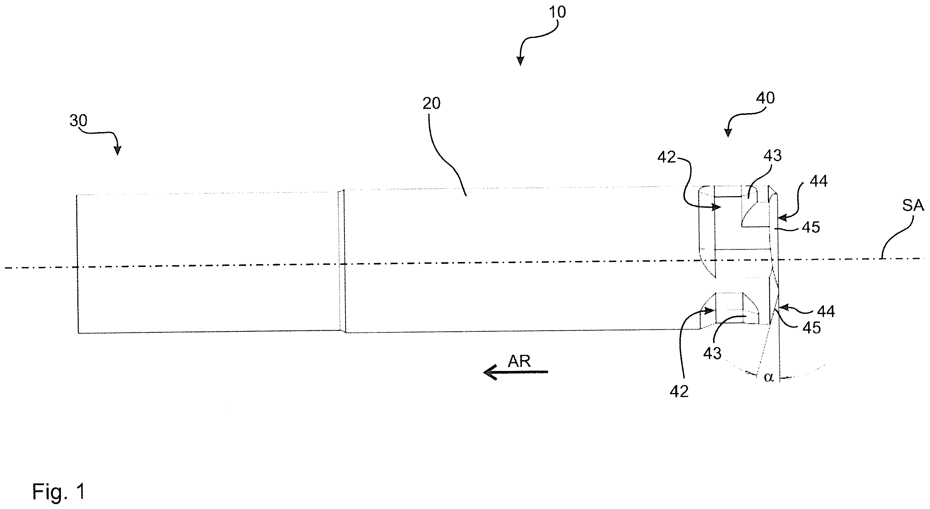

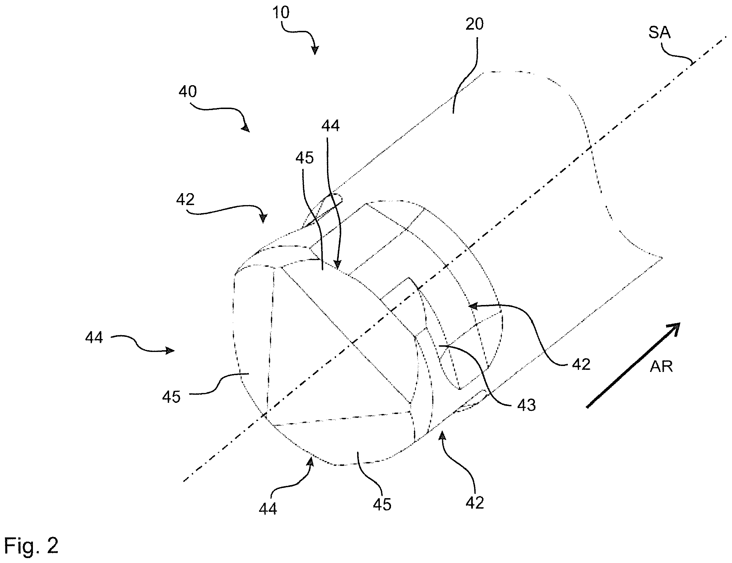

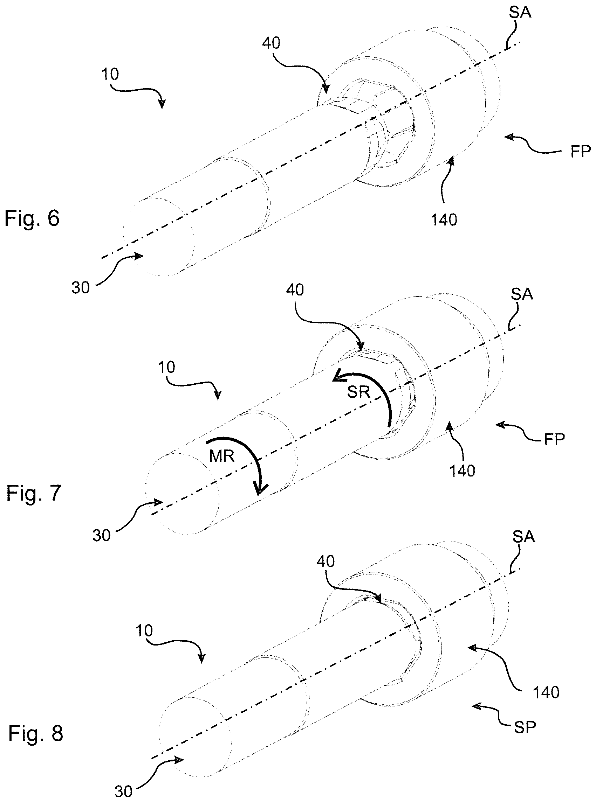

Die Fig. 1 und 2 zeigen schematisch eine Ausführungsform eines Schneidwerkzeugs 10 zum Einsatz in eine Axial-Sicherungsvorrichtung 140. Die Fig. 1 zeigt dabei, dass entlang des Werkzeugschaftes 20 ein Schneidende 30 mit zumindest einer Schneide auf der einen Seite und ein Aufnahmeende 40 am anderen Ende des Werkzeugschaftes 20 vorgesehen sind. Das Schneidwerkzeug 10 kann dabei um die zugehörige Schaftachse SA rotieren, um die gewünschte Schneidfunktionalität zur Verfügung stellen zu können. Interessant ist am Schneidwerkzeug 10 nun insbesondere das Aufnahmeende 40, welches die Fig. 2 in größerem Detail zeigt. Hier sind entlang des Umfangs in bevorzugter Weise drei Axial-Sicherungsabschnitte 42 ausgebildet. Jeder dieser Axial-Sicherungsabschnitte 42 ist für eine Formschlussfunktionalität konstruiert, so dass hier in bajonettartiger Verschlussweise eine zugehörige Formschlussfläche 43 ausgebildet wird. Wie insbesondere in Fig. 2 zu sehen ist, sind die Axial-Sicherungsabschnitte 42 bei der konkreten Ausgestaltung als L-förmige Vertiefungen in dem Außenumfang des Aufnahmeendes 40 ausgebildet, wobei ein Schenkel der L-förmigen Vertiefungen in Richtung der Stirnseite des Aufnahmeendes 40 ausläuft und sich der andere Schenkel quer zur Schaftachse SA erstreckt, insbesondere im Wesentlichen senkrecht zu dieser erstrecken kann. Die entsprechende Funktionalität wird später noch mit Bezug auf die Fig. 6 bis 11 näher erläutert.

Ebenfalls gut zu erkennen ist in der Fig. 2, dass bei der konkret dargestellten Realisierung jedem Axial-Sicherungsabschnitt 42 ein Axial-Positionierungsabschnitt 44 zugeordnet ist. Wie bereits erläutert wurde, ist dies jedoch nicht zwingend und es kann z.B. auch nur ein solcher Axial-Positionierungsabschnitt 44 vorgesehen werden. Die Axial-Positionierungsabschnitte 44 sind hier in Form von Kontaktflächen 45 ausgestaltet, welche einen spitzen Winkel zu einem zugehörigen Querschnitt des Schneidwerkzeugs 10 senkrecht zur Schaftachse SA aufweisen. Insbesondere sind die Kontaktflächen 45 als abgeschrägte Teilflächen an der Stirnseite des Aufnahmeendes 40 ausgebildet. Damit kann die ebenfalls mit Bezug auf die Fig. 6 bis 11 noch zu erläuternde Positionierungsbewegung durchgeführt werden.

Die Fig. 3 und 4 zeigen eine Ausführungsform einer Axial-Sicherungsvorrichtung 140, welche in einer Werkzeugaufnahmevorrichtung 100 gemäß der Fig. 5 eingesetzt werden kann. Die Axial-Sicherungsvorrichtung 140 ist insbesondere zum Einbau in eine Werkzeugaufnahmevorrichtung 100 in Form einer Spannzangenaufnahme ausgebildet. Um die Befestigung durchführen zu können, ist bei der Ausführungsform gemäß der Fig. 3 bis 5 eine Montageschnittstelle 148 in Form eines Innensechskants ausgebildet, um ein Anzugsdrehmoment in einfacher Weise auf die Befestigungsschnittstelle 147 übertragen zu können. Anstelle eines solchen Innensechskants sind jedoch auch andere Realisierung möglich, insbesondere andere Realisierungen, die einen Eingriff mit einem Schraubwerkzeug ermöglichen. Für die Sicherung in axialer Auszugsrichtung sowie die entsprechende Positionierungsfunktionalität sind hier die entsprechenden korrespondierenden Bauteile an einer inneren Ausnehmung bzw. einer im Wesentlichen zylindrischen Vertiefung in der Axial-Sicherungsvorrichtung 140 ausgestaltet. Am inneren Umfang der Innenfläche dieser zylindrischen Vertiefung sind hier drei Gegen-Sicherungsabschnitte 142 in Form von Gegen-Formschlussflächen 143 vorgesehen. Obwohl die Realisierung von drei Gegen-Sicherungsabschnitten 142 vorteilhaft ist, können auch weniger oder mehr solche Gegen-Sicherungsabschnitte 142 vorgesehen sein. Die Gegen-Sicherungsabschnitte 142 sind bevorzugt als Vorsprünge ausgebildet, die in die innere Ausnehmung der Axial-Sicherungsvorrichtung 140 hervorstehen. Bevorzugt können die Gegen-Sicherungsabschnitte 142 dabei als längliche Vorsprünge ausgebildet sein, die sich zumindest im Wesentlichen quer, insbesondere bevorzugt senkrecht, zur vorgegebenen Rotationachse erstrecken. Darüber hinaus ist mithilfe einer Gegen-Kontaktfläche 145 das entsprechende Gegenstück zur Kontaktfläche 45 am Aufnahmeende 40 des Schneidwerkzeugs 10 gegeben.

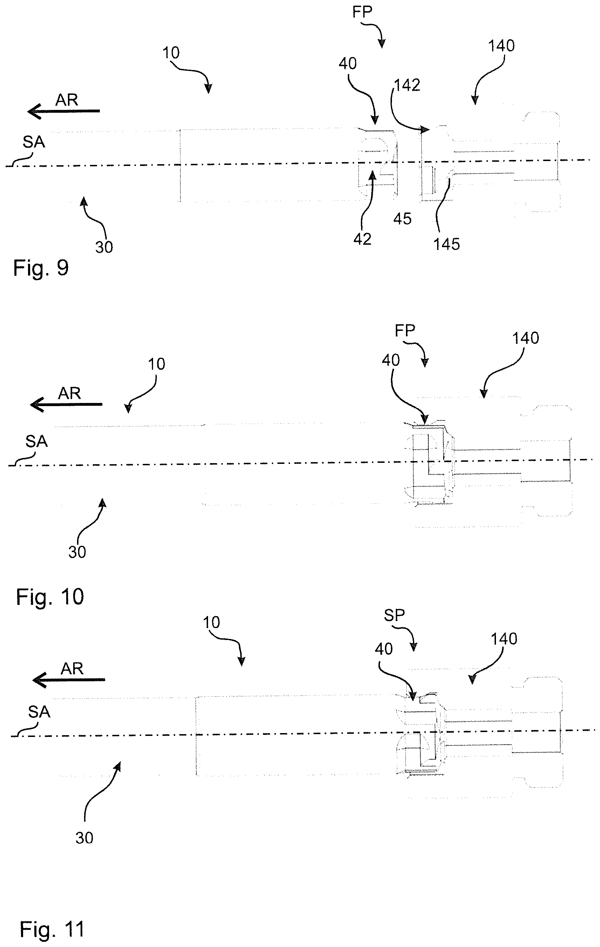

Die Fig. 6 bis 11 beschreiben nun schrittweise, wie bei einem Verfahren die Befestigung und damit auch die Sicherung gegen den axialen Auszug für ein Schneidwerkzeug 10 gewährleistet wird. In einem ersten Schritt, wie er in den Fig. 6 und 9 dargestellt ist, wird entlang der Schaftachse SA das Schneidwerkzeug 10 mit seinem Aufnahmeende 40 in die zugehörige zylindrische Vertiefung der Axial-Sicherungsvorrichtung 140 eingebracht. Dabei muss die Ausrichtung der zugehörigen Axial-Sicherungsabschnitte 42 und der Axial-Positionierungsabschnitte 44 zu den Gegen-Sicherungsabschnitten 142 und den Gegen-Kontaktflächen 145 auf die Freigabeposition FP ausgerichtet sein. Sobald die Einführbewegung gemäß der Fig. 6 und 9 durchgeführt worden ist, befindet sich also die jeweilige Kontaktfläche 45 in Positionierungskontakt mit der zugehörigen Gegen-Kontaktfläche 145. Nun erfolgt nach dem Einführen eine Montagebewegung in Form einer Montagerotation entlang der Montagerichtung MR. Diese Montagerichtung MR ist dabei der Schneidrichtung SR, d.h. der für eine Bearbeitung mit dem Schneidwerkzeug 10 vorgegebenen Rotationsrichtung, entgegengerichtet. Während dieser Rotation geschehen nun mit Bezug auf das Schneidwerkzeug 10 selbst und dessen Schaftachse SA zwei grundsätzliche Bewegungen. Die erste Bewegung ist dabei die reine Montagebewegung, die die Grundfunktionalität der Sicherung gegen den axialen Auszug zur Verfügung stellt. Diese wird nachfolgend erläutert.

Durch die Rotation entlang der Montagerichtung MR wird durch die Bajonettsystematik ein formschlüssiges Eingreifen der Formschlussflächen 43 in die zugehörigen Gegen-Formschlussflächen 143 erzeugt. Dabei wird sichergestellt, dass nach dem Erreichen der Sicherungsposition SP, wie sie die Fig. 8 und 11 zeigen, eine Auszugskraft entlang der Auszugsrichtung AR über diesen Formschlussabschnitt in den Axial-Sicherungsabschnitt 42 eingebracht werden kann und sich dort abstützt. Eine entsprechende Auszugskraft und das zugehörige Abstützen führen nun dazu, dass das Schneidwerkzeug 10 in dieser Sicherungsposition SP verbleibt und nicht mehr herausgezogen werden kann.

Die zweite Bewegung ist die Positionierungsbewegung, welche gleichzeitig mit der Montagebewegung durchgeführt wird. Bei der Rotation entlang der Montagerichtung MR gleitet die jeweilige Gegen-Kontaktfläche 145 auf der Kontaktfläche 45 jeweils ab. Hier ist in den Fig. 3 und 4 gut zu erkennen, dass die Gegen-Kontaktflächen 145 bei der dargestellten Realisierung als Kugeloberflächen ausgebildet sind. Es ist unmittelbar ersichtlich, dass die Gegen-Kontaktfläche 145 auch Vorsprünge mit einer anderen Formgebung sein können. Es sind jedoch auch andere Realisierungen für das Zusammenwirken zwischen Kontaktflächen 45 und Gegen-Kontaktflächen 145 möglich, die insbesondere ebenfalls das Prinzip relativ zueinander verdrehter schiefer Ebenen nutzen können. Bei dem Abgleiten auf der zugehörigen Kontaktfläche 45 wird eine Schubbewegung bzw. Hubbewegung auf das Schneidwerkzeug 10 aufgebracht. Dabei wird das Schneidwerkzeug 10 entlang der Auszugsrichtung AR, also aus der zylindrischen Öffnung der Axial-Sicherungsvorrichtung 140 herausbewegt. Dieses Herausbewegen ist genau in der Richtung zur Verfügung gestellt, in welcher eine entsprechende Auszugskraft von einem zugehörigen Werkstück ebenfalls wirken würde. Mit anderen Worten bewegt sich das Schneidwerkzeug von der Position der Fig. 7 und 10 zu der Position gemäß der Fig. 8 und 11 entlang der Schaftachse SA in Auszugsrichtung AR aus der Axial-Sicherungsvorrichtung 140 heraus. Dieses Herausbewegen führt nun dazu, dass sich in der Sicherungsposition SP das gesamte Schneidwerkzeug 10 in dieser herausgeschobenen Position befindet und sämtliches axiales Spiel beseitigt ist. Wirkt nun eine Auszugskraft beim Einsetzen des Schneidwerkzeugs von einem Werkstück auf dieses Schneidwerkzeug 10 ein, so führt diese Auszugskraft dazu, dass ein weiteres Ziehen entlang dieser Positionierungsbewegung stattfindet, ein weiteres Auswandern aber über das Zusammenwirken von Axial-Sicherungsabschnitt 42 und Gegen-Sicherungsabschnitt 142 verhindert ist. Um jedoch in die Freigabeposition FP zurückzugelangen, müsste sich das Schneidwerkzeug 10 genau entgegen der Montagerichtung bewegen. Somit wird durch die Axial-Positionierung und die Schubumkehr die Auszugskraft beim Einsatz des Schneidwerkzeugs 10 dazu verwendet, gleichzeitig als Sicherungskraft zu dienen, welche das Schneidwerkzeug 10 über die Axial-Positionierungsfunktionalität in der Sicherungsposition SP hält und spielfrei sichert.

Mit der beschriebenen Realisierung können z.B. Standard-Spannzangenaufnahmen in sehr einfacher und kostengünstiger Weise zu sehr stabilen und auszugsicheren Werkzeugaufnahmen insbesondere für Fräser umgerüstet werden. Durch die Anordnung der Axial-Sicherungsvorrichtung hinter der Spannzange wird im Vergleich zu z.B. einer Realisierung von entsprechenden Gegen-Sicherungsabschnitten 142 unmittelbar an einer Innenwandung einer Spannzange ferner ein Durchrutschen der Spannzange relativ zum Rest der Werkzeugaufnahmevorrichtung zuverlässig verhindert, da die Aufnahme übermäßigen Drehmoments von der Spannzange entkoppelt ist.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichen

- 10: Schneidwerkzeug
- 20: Werkzeugschaft
- 30: Schneidende
- 40: Aufnahmeende
- 42: Axial-Sicherungsabschnitt
- 43: Formschlussfläche
- 44: Axial-Positionierungsabschnitt
- 45: Kontaktfläche

- 100: Werkzeugaufnahmevorrichtung
- 110: Spannvorrichtung
- 112: Hauptübertragungsabschnitt
- 120: Aufnahmekörper
- 122: Gegen-Nebenübertragungsfläche
- 130: Aufnahmeraum
- 140: Axial-Sicherungsvorrichtung
- 142: Gegen-Sicherungsabschnitt
- 142a: innere Umfangsfläche
- 143: Gegen-Formschlussfläche
- 145: Gegen-Kontaktfläche
- 145a: Bodenfläche
- 146: Grundkörper
- 146a: Aufnahmeöffnung
- 146b: Innenwandung
- 147: Befestigungsschnittstelle
- 148: Montageschnittstelle
- 149: Nebenübertragungsfläche
- 150: Freiraum

- 300: Aufnahmesystem

- SA: Schaftachse
- AR: Auszugsrichtung
- MR: Montagerichtung
- SR: Schneidrichtung
- FP: Freigabeposition
- SP: Sicherungsposition
- α: Keilwinkel
- BP: Befestigungsposition
- BR: Befestigungsrichtung

## Patentansprüche

1. Axial-Sicherungsvorrichtung (140) zur Sicherung eines rotierenden Schneidwerkzeugs (10), aufweisend einen Grundkörper (146) mit einer Befestigungsschnittstelle (147) für eine Befestigung in einer Werkzeugaufnahmevorrichtung (100) an einer von einem Hauptübertragungsabschnitt (112) für Schneiddrehmoment beabstandeten Befestigungsposition (BP) der Werkzeugaufnahmevorrichtung (100), der Grundkörper (146) weiter aufweisend eine Aufnahmeöffnung (146a) mit einer Innenwandung (146b), wobei die Innenwandung (146b) einen Gegen-Sicherungsabschnitt (142) aufweist zum Eingreifen in einen Axial-Sicherungsabschnitt (42) des Schneidwerkzeugs (10) zur Sicherung gegen einen axialen Auszug entlang einer Schaftachse (SA) eines Werkzeugschaftes (20) des Schneidwerkzeugs (10),
**dadurch gekennzeichnet, dass** an einer inneren Bodenfläche (145a) der Aufnahmeöffnung (146a) des Grundkörpers (146) eine als Vorsprung ausgebildete Gegen-Kontaktfläche (145) angeordnet ist zum Zusammenwirken mit einem Axial-Positionierungsabschnitt (44) des Schneidwerkzeugs (10) für eine axiale Positionierung entlang der Schaftachse (SA) in der Auszugsrichtung (AR).

2. Axial-Sicherungsvorrichtung (140) nach Anspruch 1, **dadurch gekennzeichnet, dass** separat von der Befestigungsschnittstelle (147) eine Nebenübertragungsfläche (149) ausgebildet ist zur drehmomentübertragenden Kontaktierung einer Gegen-Nebenübertragungsfläche (122) der Werkzeugaufnahmevorrichtung (100).

3. Axial-Sicherungsvorrichtung (100) nach Anspruch 2, **dadurch gekennzeichnet, dass** die Nebenübertragungsfläche (149) für einen zumindest teilweisen Formschluss mit der Gegen-Nebenübertragungsfläche (122) ausgebildet ist.

4. Axial-Sicherungsvorrichtung (100) nach einem der Ansprüche 2 oder 3,
**dadurch gekennzeichnet, dass** die Befestigungsschnittstelle (147) eine Befestigungsrichtung (BR) aufweist, wobei die Nebenübertragungsfläche (149) die Gegen-Nebenübertragungsfläche (122) quer zur Befestigungsrichtung (BR) kontaktiert.

5. Axial-Sicherungsvorrichtung (100) nach einem der Ansprüche 2 bis 4,
**dadurch gekennzeichnet, dass** zwischen der Nebenübertragungsfläche (149) und der Befestigungsschnittstelle (147) ein Freiraum (150) ausgebildet ist.

6. Axial-Sicherungsvorrichtung (100) nach einem der vorangegangenen Ansprüche, **dadurch gekennzeichnet, dass** die Aufnahmeöffnung (146a) eine hülsenförmige Ausbildung, insbesondere in Form einer im Wesentlichen zylindrischen Vertiefung, aufweist, wobei der Gegen-Sicherungsabschnitt (142) an der Innenwandung (146b) in Form einer inneren Umfangsfläche (142a) der Aufnahmeöffnung (146a) angeordnet ist.

7. Axial-Sicherungsvorrichtung (100) nach einem der vorangegangenen Ansprüche, **dadurch gekennzeichnet, dass** der Grundkörper (146) eine Montageschnittstelle (148) aufweist für die Aufnahme eines Befestigungswerkzeugs zur Durchführung einer Befestigungsbewegung.

8. Aufnahmesystem (300) für die Aufnahme eines rotierenden Schneidwerkzeugs (10) zur rotierenden Bearbeitung eines Werkstücks, aufweisend eine Axial-Sicherungsvorrichtung (140) mit den Merkmalen eines der Ansprüche 1 bis 7 und eine Werkzeugaufnahmevorrichtung (100) für eine rotierende Bearbeitungsbewegung, wobei die Axial-Sicherungsvorrichtung (140) mittels der Befestigungsschnittstelle (147) in der Befestigungsposition (BP) in einem Aufnahmeraum (130) der Werkzeugvorrichtung (100) befestigt ist.

9. Aufnahmesystem (300) nach Anspruch 8, **dadurch gekennzeichnet, dass** die Axial-Sicherungsvorrichtung (140) entgegen der Auszugsrichtung (AR) hinter einer Spannvorrichtung (110) der Werkzeugaufnahmevorrichtung (100) in dem Aufnahmeraum (130) angeordnet ist.

10. Aufnahmesystem (300) nach einem der Ansprüche 8 oder 9, **dadurch gekennzeichnet, dass** die Werkzeugaufnahmevorrichtung (100) zumindest eine der folgenden Spannvorrichtungen (110) mit dem Hauptübertragungsabschnitt (112) für Schneiddrehmoment aufweist:
- Schrumpfaufnahme,
- eine oder mehrere Spannzangen,
- Backenfutter.

11. Verfahren zur Anpassung einer Werkzeugaufnahmevorrichtung (100) für die Aufnahme eines Schneidwerkzeugs (10), aufweisend die folgenden Schritte:
- Einbringen einer Axial-Sicherungsvorrichtung (140) mit den Merkmalen eines der Ansprüche 1 bis 7 in die Werkzeugaufnahmevorrichtung (100) in die Befestigungsposition (BP),
- Durchführen einer Befestigungsbewegung zur Befestigung der Axial-Sicherungsvorrichtung (140) mittels der Befestigungsschnittstelle (147).

## Claims

1. Axial securing device (140) for securing a rotating cutting tool (10), having a basic body (146) with a fastening interface (147) for fastening in a tool receiving device (100) in a fastening position (BP), spaced apart from a main transmission portion (112) for cutting torque, of the tool receiving device (100), the basic body (146) also having a receiving opening (146a) with an inner wall (146b), wherein the inner wall (146b) has a mating securing portion (142) for engaging in an axial securing portion (42) of the cutting tool (10) for securing against axial removal along a shank axis (SA) of a tool shank (20) of the cutting tool (10),
**characterized in that**, on an inner bottom face (145a) of the receiving opening (146a) of the basic body (146), there is arranged a mating contact face (145) in the form of a protrusion for cooperating with an axial positioning portion (44) of the cutting tool (10) for axial positioning along the shank axis (SA) in the removal direction (AR).

2. Axial securing device (140) according to Claim 1, **characterized in that**, separately from the fastening interface (147), a secondary transmission face (149) is formed, for coming into torque-transmitting contact with a mating secondary transmission face (122) of the tool receiving device (100).

3. Axial securing device (100) according to Claim 2, **characterized in that** the secondary transmission face (149) is designed for an at least partial form-fit with the mating secondary transmission face (122) .

4. Axial securing device (100) according to either of Claims 2 and 3, **characterized in that** the fastening interface (147) has a fastening direction (BR), wherein the secondary transmission face (149) comes into contact with the mating secondary transmission face (122) transversely to the fastening direction (BR) .

5. Axial securing device (100) according to one of Claims 2 to 4, **characterized in that** a clearance (150) is formed between the secondary transmission face (149) and the fastening interface (147).

6. Axial securing device (100) according to one of the preceding claims, **characterized in that** the receiving opening (146a) has a sleeve-like formation, in particular in the form of a substantially cylindrical recess, wherein the mating securing portion (142) is arranged on the inner wall (146b) in the form of an inner circumferential face (142a) of the receiving opening (146a).

7. Axial securing device (100) according to one of the preceding claims, **characterized in that** the basic body (146) has a mounting interface (148) for receiving a fastening tool for carrying out a fastening movement.

8. Receiving system (300) for receiving a rotating cutting tool (10) for the rotary machining of a workpiece, having an axial securing device (140) having the features of one of Claims 1 to 7 and a tool receiving device (100) for a rotary machining movement, wherein the axial securing device (140) is fastened in the fastening position (BP) in a receiving space (130) of the tool device (100) by means of the fastening interface (147).

9. Receiving system (300) according to Claim 8, **characterized in that** the axial securing device (140) is arranged counter to the removal direction (AR) behind a clamping device (110) of the tool receiving device (100) in the receiving space (130).

10. Receiving system (300) according to either of Claims 8 and 9, **characterized in that** the tool receiving device (100) has at least one of the following clamping devices (110) with the main transmission portion (112) for cutting torque:
- shrink-fit adapter,
- one or more collet chucks,
- jaw chuck.

11. Method for adapting a tool receiving device (100) for receiving a cutting tool (10), having the following steps:
- introducing an axial securing device (140) having the features of one of Claims 1 to 7 into the tool receiving device (100) into the fastening position (BP),
- carrying out a fastening movement for fastening the axial securing device (140) by means of the fastening interface (147).

## Revendications

1. Dispositif de blocage axial (140) pour bloquer un outil de coupe rotatif (10), comprenant un corps de base (146) ayant une interface de fixation (147) pour une fixation dans un dispositif de réception d'outil (100) à une position de fixation (BP) du dispositif de réception d'outil (100) espacée d'une section de transmission principale (112) pour un couple de coupe, le corps de base (146) présentant en outre une ouverture de réception (146a) ayant une paroi intérieure (146b), la paroi intérieure (146b) présentant une section de blocage antagoniste (142) pour s'engager dans une section de blocage axial (42) de l'outil de coupe (10) pour bloquer une extraction axiale le long d'un axe de tige (SA) d'une tige d'outil (20) de l'outil de coupe (10),
**caractérisé en ce qu'**une surface de contact antagoniste (145) réalisée sous forme de saillie est agencée sur une surface de fond intérieure (145a) de l'ouverture de réception (146a) du corps de base (146) pour coopérer avec une section de positionnement axial (44) de l'outil de coupe (10) pour un positionnement axial le long de l'axe de tige (SA) dans la direction d'extraction (AR).

2. Dispositif de blocage axial (140) selon la revendication 1, **caractérisé en ce qu'une** surface de transmission secondaire (149) est réalisée séparément de l'interface de fixation (147) pour venir en contact de transmission de couple avec une surface de transmission secondaire antagoniste (122) du dispositif de réception d'outil (100).

3. Dispositif de blocage axial (100) selon la revendication 2, **caractérisé en ce que** la surface de transmission secondaire (149) est réalisée pour une complémentarité de forme au moins partielle avec la surface de transmission secondaire antagoniste (122).

4. Dispositif de blocage axial (100) selon l'une quelconque des revendications 2 ou 3, **caractérisé en ce que** l'interface de fixation (147) présente une direction de fixation (BR), la surface de transmission secondaire (149) venant en contact avec la surface de transmission secondaire antagoniste (122) transversalement à la direction de fixation (BR).

5. Dispositif de blocage axial (100) selon l'une quelconque des revendications 2 à 4, **caractérisé en ce qu'**un espace libre (150) est réalisé entre la surface de transmission secondaire (149) et l'interface de fixation (147).

6. Dispositif de blocage axial (100) selon l'une quelconque des revendications précédentes, **caractérisé en ce que** l'ouverture de réception (146a) présente une configuration en forme de manchon, notamment sous la forme d'une cavité essentiellement cylindrique, la section de blocage antagoniste (142) étant agencée sur la paroi intérieure (146b) sous la forme d'une surface périphérique intérieure (142a) de l'ouverture de réception (146a).

7. Dispositif de blocage axial (100) selon l'une quelconque des revendications précédentes, **caractérisé en ce que** le corps de base (146) présente une interface de montage (148) pour recevoir un outil de fixation pour réaliser un mouvement de fixation.

8. Système de réception (300) pour la réception d'un outil de coupe rotatif (10) pour l'usinage rotatif d'une pièce, présentant un dispositif de blocage axial (140) ayant les caractéristiques de l'une quelconque des revendications 1 à 7 et un dispositif de réception d'outil (100) pour un mouvement d'usinage rotatif, le dispositif de blocage axial (140) étant fixé au moyen de l'interface de fixation (147) dans la position de fixation (BP) dans un espace de réception (130) du dispositif d'outil (100).

9. Système de réception (300) selon la revendication 8, **caractérisé en ce que** le dispositif de blocage axial (140) est agencé dans l'espace de réception (130) derrière un dispositif de serrage (110) du dispositif de réception d'outil (100), à l'encontre de la direction d'extraction (AR).

10. Système de réception (300) selon l'une quelconque des revendications 8 ou 9, **caractérisé en ce que** le dispositif de réception d'outil (100) présente au moins l'un des dispositifs de serrage (110) suivants avec la section de transmission principale (112) pour un couple de coupe :
- un porte-outil de frettage,
- une ou plusieurs pinces de serrage,
- un mandrin à mâchoires.

11. Procédé pour adapter un dispositif de réception d'outil (100) pour recevoir un outil de coupe (10), présentant les étapes suivantes :
- l'introduction d'un dispositif de blocage axial (140) ayant les caractéristiques de l'une quelconque des revendications 1 à 7 dans le dispositif de réception d'outil (100) dans la position de fixation (BP),
- la réalisation d'un mouvement de fixation pour fixer le dispositif de blocage axial (140) au moyen de l'interface de fixation (147).
